# EUROPEAN PATENT APPLICATION

(11) **EP 4 769 396 A1**
(43) Date of publication of application: **01.07.2026**
(21) Application number: 25205281.6
(22) Date of filing: 29.09.2025
(51) Int. Cl.: G10L 25/51, G10L 25/78, G10L 25/21, G10L 17/26

(54) **EDGE COMPUTING APPARATUS AND SYSTEM FOR SYNCHRONIZING MULTIMODAL DATA BASED ON HUMAN FACTORS INTELLIGENCE**

(30) Priority: 30.12.2024 CN 202411975494
(71) Applicant: Kingfar International Inc., Beijing 100193 (CN)
(72) Inventor: ZHAO, Qichao, Beijing, 100193 (CN); YANG, Ran, Beijing, 100193 (CN)
(74) Representative: Meyer-Dulheuer MD Legal Patentanwälte PartG mbB

(57) **Abstract**

Provided are an edge computing apparatus and a system for synchronizing multimodal data based on human factors intelligence. Behaviors and/or voices of the test subject can be recognized through the AI module, the event marking information is issued when the recognition result is matched with the target behavior and/or the target voice, so that the test subjects can accurately trigger the event marking as long as they perform a predefined target behavior or make a preset target voice when receiving stimulation such as vision, olfaction, avoiding the inaccuracy of test analysis caused by the artificially triggered event marking by the personnel implementing an experiment, effectively improving the objectivity of event marking, thus helping to accurately analyze the impacts of stimulus events on the multimodal data.

## Description

### TECHNICAL FIELD

The present disclosure relates to human factors engineering and ergonomic technologies, and in particular, to an edge computing apparatus and a system for synchronizing multimodal data based on human factors intelligence.

### BACKGROUND

Human Factors Engineering (HFE) and Ergonomics primarily study relationships among humans, machines, and environments, with extensive applications in scenarios such as healthcare, sports rehabilitation, and intelligent driving. When investigating these relationships in the human factors engineering, it is necessary to collect data related to humans, machines, and the environment, conducting relevant tests and analyses such as human factors or ergonomics. During testing, personnel performing the experiments are required to manually trigger event marking to analyze the impacts of stimulus events on multimodal data.

However, the event marking triggered by the personnel performing the experiments may not be objective, thus failing to accurately analyze the impacts of the stimulus events on the multimodal data.

### SUMMARY

Embodiments of the present disclosure provides an edge computing apparatus and a system for synchronizing multimodal data based on human factors intelligence. by recognizing behaviors and/or voices of a test subject through an artificial intelligence (AI) module, the event marking is objectively triggered, which helps to accurately determine impacts of stimulus events on multimodal data.

In a first aspect, an embodiment of the present disclosure provides an edge computing apparatus for synchronizing multimodal data based on human factors intelligence, including an artificial intelligence (AI) module, a control module, and a first interface. The AI module and the first interface are coupled to the control module. The AI module is configured to be coupled to a video capture device and/or a voice input device. The AI module is configured to recognize a video signal acquired by the video capture device, and issue first event marking information when a recognition result of the video signal matches a target behavior, and/or is configured to recognize a voice signal acquired by the voice input device, and issue second event marking information when a recognition result of the voice signal matches a target voice. The control module is configured to perform communication protocol encapsulation processing on the first event marking information and/or the second event marking information, and send processed information to the first interface. The first interface is configured to couple to a host computer, and send the first event marking information and/or the second event marking information to the host computer.

In a possible implementation, the apparatus may further include a wireless communication module. The wireless communication module may be configured to be coupled to the control module. The control module may be further configured to send the first event marking information and/or the second event marking information to at least one sensor through the wireless communication module. The at least one sensor may be worn by a test subject.

In a possible implementation, when the at least one sensor detects the multimodal data offline, the control module may be configured to send the first event marking information and/or the second event marking information to the at least one sensor through the wireless communication module.

In a possible implementation, the situation where the at least one sensor detects multimodal data offline may be that the at least one sensor does not have a wired or wireless connection to the host computer, and does not send detected multimodal data to the host computer in real time.

In a possible implementation, the apparatus may further include a storage module. The storage module may be coupled to the control module. The control module may be further configured to store the first event marking information and/or the second event marking information into the storage module.

In a possible implementation, the apparatus may further include a second interface. The second interface may be coupled to the control module, and may be further configured to be coupled to a third-party software terminal. The control module may be further configured to send the first event marking information and/or the second event marking information to the third-party software terminal through the second interface. Exemplarily, the third-party software terminal may be a terminal on which third-party software is installed. In a possible implementation, the third-party software terminal may be the host computer.

In a possible implementation, the control module may be further configured to obtain an event marking protocol from the host computer through the first interface, and send the event marking protocol to the third-party software terminal through the second interface. The event marking protocol may be configured to define the first event marking information and/or the second event marking information. Exemplarily, the event marking protocol may be a specification defining event marking information, for example, defining which fields are configured to represent the event marking information, and defining different event contents corresponding to different values of these certain fields.

In a possible implementation, the control module may be further configured to be connected to an optical module, receive an optical signal sent by the optical module, generate third event marking information when the optical signal exceeds a first threshold, and send the third event marking information to the host computer through the first interface.

In a possible implementation, the apparatus may further include an audio interface. The audio interface may be coupled to the control module and may be configured to send a received audio signal to the control module. The control module may be further configured to generate fourth event marking information when the audio signal exceeds a second threshold, and send the fourth event marking information to the host computer through the first interface.

In a possible implementation, the apparatus may further include a third interface. The third interface may be coupled to the control module, and may be further configured to be coupled to the first external device, and convert a level of fifth event marking information sent by the first external device to a transistor-transistor togic (TTL) level supported by the control module. The control module may be further configured to receive the fifth event marking information through the third interface, and send the fifth event marking information to the host through the first interface.

In a possible implementation, the apparatus may further include a fourth interface. The fourth interface may be coupled to the control module, and may be further configured to be coupled to a second external device. The control module may be further configured to send the first event marking information and/or the second event marking information to the second external device through the fourth interface.

In a second aspect, an embodiment of the present disclosure provides a system for synchronizing a multimodal data based on human factors intelligence, which may include a host computer, at least one sensor, and a system for synchronizing multimodal data synchronization based on human factors intelligence according to any one of the first aspect, and may further include a video capture device and/or a voice input device. The at least one sensor may be configured to send collected multimodal data to the host computer. The video capture device and/or the voice input device may be configured to trigger the edge computing apparatus for synchronizing multimodal data to perform event marking. The event marking is configured to generate first event marking information and/or second event marking information. The edge computing apparatus for synchronizing multimodal data may be configured to send the first event marking information and/or the second event marking information to the host computer. The host computer may be configured to perform data synchronization and analysis on the multimodal data based on the first event marking information and/or the second event marking information.

In a possible implementation, the edge computing apparatus for synchronizing multimodal data may be configured to send the first event marking information and/or the second event marking information to the at least one sensor when the at least one sensor is offline.

In a possible implementation, the system may further include an optical module. The optical module may be configured to trigger the edge computing apparatus for synchronizing multimodal data to perform optical event marking. The optical event marking may be configured to generate third event marking information. The edge computing apparatus for synchronizing multimodal data may be further configured to send the third event marking information to the host computer. The host computer may be further configured to perform data synchronization and analysis on the multimodal data based on the first event marking information and/or the second event marking information, and the third event marking information.

In a possible implementation, the host computer may be further configured to trigger the edge computing apparatus for synchronizing multimodal data to perform voice event marking. The voice event marking is configured to generate fourth event marking information. The edge computing apparatus for synchronizing multimodal data may be further configured to send the fourth event marking information to the host computer. The host computer may be further configured to perform data synchronization and analysis on the multimodal data based on the first event marking information and/or the second event marking information, and the fourth event marking information.

In a possible implementation, the system may further include a first external device. The first external device may be configured to send fifth event marking information to the edge computing apparatus for synchronizing multimodal data. The edge computing apparatus for synchronizing multimodal data may be further configured to receive the fifth event marking information, and send the fifth event marking information to the host computer. The host computer may be further configured to perform data synchronization and analysis on the multimodal data based on the first event marking information and/or the second event marking information, and the fifth event marking information.

In a possible implementation, the system may further include a second external device. The edge computing apparatus for synchronizing multimodal data may be further configured to send the first event marking information and/or the second event marking information to the second external device.

In a possible implementation, the at least one sensor may be configured to send the multimodal data to the host computer in a wireless manner.

According to embodiments of the present disclosure provide an edge computing apparatus and a system for synchronizing multimodal data based on human factors intelligence, by recognizing behaviors and/or voices of the test subject through an AI module, event marking information is issued when the recognition result is matched with a target behavior and/or a target voice, so that test subjects can accurately trigger the event marking as long as they perform a preset target behavior or make a preset target voice when receiving stimulation such as vision, audition, vibration, gustation, avoiding the inaccuracy of tests and analyses caused by the artificially triggered event marking by the personnel performing experiments, effectively improving the objectivity of event marking, thus helping to accurately analyze the impacts of stimulus events on the multimodal data. Additionally, according to the event marking information, the host computer can synchronize the data sent by different sensors after receiving the event marking information, and then synchronize the data sent by different sensors before receiving the event marking information. Therefore, the event marking information is also beneficial to realizing synchronization of the multimodal data sent by different sensors.

### BRIEF DESCRIPTION OF DRAWINGS

In order to more clearly describe the technical solutions of embodiments of the present disclosure, the drawings required in the embodiments will be briefly described below. It is appreciated that, the drawings described below are merely some embodiments of the present disclosure, and for those skilled in the art, other drawings can be obtained based on these drawings without creative effort.
FIG. 1 is an embodiment of an edge computing apparatus for synchronizing multimodal data based on human factors intelligence according to an embodiment of the present disclosure;
FIG. 2a is another embodiment of a system for synchronizing multimodal data based on human factors intelligence according to an embodiment of the present disclosure;
FIG. 2b is another embodiment of a system for synchronizing multimodal data based on human factors intelligence according to an embodiment of the present disclosure;
FIG. 2c is another embodiment of a system for synchronizing multimodal data based on human factors intelligence according to an embodiment of the present disclosure;
FIG. 3 is another embodiment of a system for synchronizing multimodal data based on human factors intelligence according to an embodiment of the present disclosure;
FIG. 4 is another embodiment of a system for synchronizing multimodal data based on human factors intelligence according to an embodiment of the present disclosure; and
FIG. 5 is another embodiment of a system for synchronizing multimodal data based on human factors intelligence according to an embodiment of the present disclosure.

### DESCRIPTION OF EMBODIMENTS

Terms used in embodiments of the present disclosure are merely configured to explain specific embodiments of the present disclosure, and are not intended to limit the present disclosure.

In an embodiment of the present disclosure, the multimodal data may include environment-related data and/or human-related data. The environment-related data may include any one or more of location data, humidity data, temperature data, chromaticity data, brightness data, noise data, weather data (such as air pressure), road condition data, traffic data, stimulus signal data, and event or signal event marking data. The human-related data may include any one or more of skin electrodermal data, skin temperature (SKT) data, pulse data (such as photoplethysmography (PPG)), blood pressure (BP) data, blood oxygen data (such as peripheral capillary oxygen saturation (SpO₂)), electrodermal activity (EDA), electrocardiogram data, electromyography data, muscular oxygen data, respiratory data (such as respiratory (RESP) rate), biomechanical data (such as single-point force-sensing resistor (FSR) values), near-infrared brain imaging data, electroencephalogram data, transcranial stimulation data, heart rate variability data, heart rate data, and behavior data.

In an embodiment of the present disclosure, the event marking information may be information about an event that causes changes in human body functions by stimulating the human vision, audition, vibration (tactition), olfaction, gustation, and the like. Exemplarily, the event may be that when a sound exceeds a sound threshold, it stimulates the human audition, thereby causing changes in the human body functions, or that when light exceeds a light threshold, it stimulates the human vision, thereby causing changes in the human body functions, or that when a temperature exceeds a temperature threshold, it stimulates the human body, thereby causing changes in the human body functions, and the like. Exemplarily, the event marking information may also be corresponding information triggered by a certain action, etc.. Exemplarily, different events represented by the event marking information may be defined by different values of one or more fields.

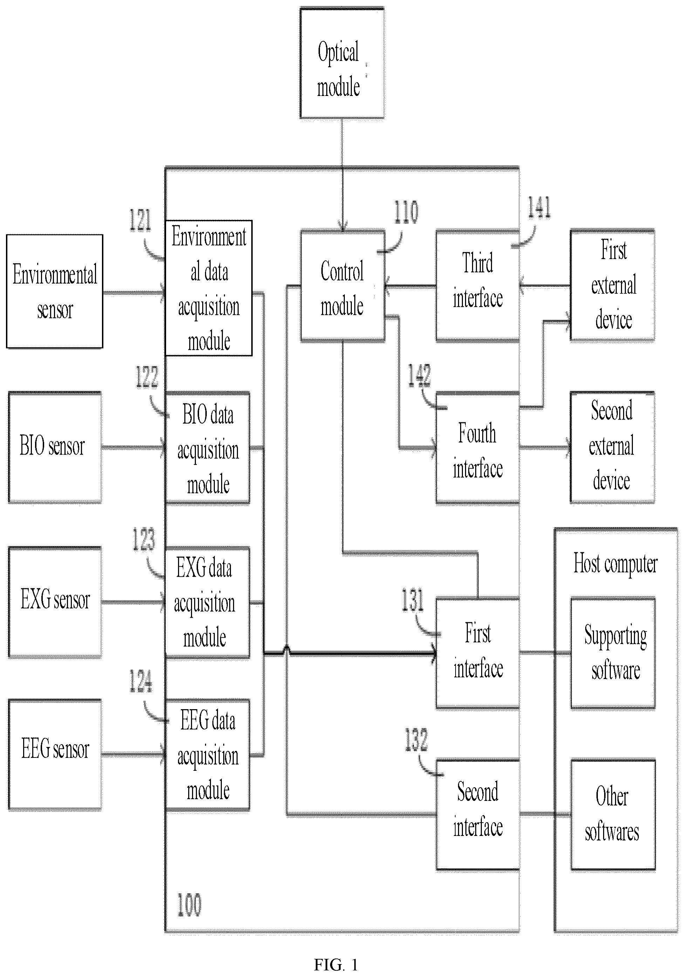

An embodiment of an edge computing apparatus for synchronizing multimodal data based on human factors intelligence is the edge computing apparatus for synchronizing multimodal data 100 shown in FIG. 1. As shown in FIG. 1, the edge computing apparatus for synchronizing multimodal data 100 may include a control module 110, an environmental data acquisition module 121, a biosensor (BIO) data acquisition module 122, an electrophysiological (EXG) data acquisition module 123, an electroencephalogram (EEG) data acquisition module 124, a first interface 131, a second interface 132, a third interface 141, a fourth interface 142, and the like.

The environmental data acquisition module 121 may be configured to be connected to an environmental sensor and receive environmental data sent by the environmental sensor.

The BIO data acquisition module 122 may be configured to be connected to a BIO sensor, and receive BIO data sent by the BIO sensor, for example, biological data such as PPG, EDA, SPO2, SKT, RESP, BP, and FSR.

The EXG data acquisition module 123 may be configured to be connected to an EXG sensor, for example, an electromyography sensor (EMG), an electrocardiogram sensor (ECG), and the like, and receive electromyography data, electrocardiogram data, and other bioelectrical data sent by the EXG sensor.

The EEG data acquisition module 124 may be configured to be connected to an electroencephalogram sensor (EEG), and receive bioelectrical data such as EEG data sent by the EEG.

The BIO, EMG, ECG and EEG sensors can be worn on the test subjects for conducting tests, so as to obtain BIO data, electromyography data, electrocardiogram data, electroencephalogram data and the like.

The first interface 131 may be configured to be connected to a host computer, and transmit the environmental data, BIO data, electromyography data, electrocardiogram data, electroencephalogram data, and the like to the host computer. The host computer records these data through a supporting software. Exemplarily, the first interface 131 may be a type-A USB interface, a type-B USB interface, a type-C USB interface, or the like. The host computer may be a server, an industrial control computer, or a terminal such as a mobile phone or a computer. Software for data receiving, processing, analysis and/or collection control can be installed on the host computer. After the host computer receives the event marking information and the multimodal data collected by the sensor through the first interface 131, time axis synchronous alignment based on the event marking information can be performed on the multimodal data collected at the same time through the software, thereby realizing processing and analysis of various different modalities of data collected at the same moment, and thus obtaining the influence of the stimulus event generating the event marking on various aspects of the human body functions. Exemplarily, the influence of fatigue on the body functions of the driver is tested, the test subject may wear or attach sensors such as BIO, ECG, EEG and the like to collect multimodal data of the test subjects and send the multimodal data to the host computer. When the test subject is fatigued, an event marking is triggered, and the corresponding event marking information is sent to the host computer. The host computer aligns the multimodal data based on the event marking information to obtain the corresponding relationship between the multimodal data. For example, when the blood pressure reaches a certain value, the corresponding electrocardiogram data, electromyography data, electroencephalogram data, and the like can be determined. Additionally, based on the positions of the event marking information, the corresponding values of the multimodal data of the test subject in the fatigue state at different moments can be obtained. By analyzing these multimodal data, it is possible to determine the state of the corresponding human body functions and predict potential consequences in driving scenarios.

The control module 110 may be configured to generate event marking information (the event marking information triggered by the light may be referred to as third event marking information) when light emitted by the optical module exceeds a threshold, and send the event marking information through the first interface 131, the second interface 132, and the fourth interface 142.

The control module 110 may be further configured to perform communication protocol processing on the event marking information, for example, encapsulate a corresponding communication protocol packet header for the event marking information, so that the event marking information can meet communication protocol requirements used by the first interface 131, the second interface 132, and the fourth interface 142, and send the communication protocol requirements to the first interface 131, the second interface 132, and the fourth interface 142. Exemplarily, the control module 110 may encapsulate the event marking information into a data packet conforming to a USB communication protocol, or process it into a data packet transmissible via a serial peripheral interface (SPI), and so on.

The first interface 131 is further configured to transmit the event marking information to the host computer.

Exemplarily, the test subject may visually perceive the light emitted by the light module. When the light exceeds a threshold, the test subject's function may be stimulated to change. While the edge computing apparatus for synchronizing multimodal data 100 collects the multimodal data, the control module 110 generates event marking information triggered by the stimulus event, and synchronizes the multimodal data and event marking information to the host computer. The supporting software of the host computer can analyze the relationship between the stimulus event and the human body function according to the event marking information and the collected multimodal data, and determine the influence of the stimulus event on the human body function.

The second interface 132 is coupled to the control module 110. The control module 110 may be further configured to send the event marking information to other softwares (third-party software) installed on the host computer through the second interface 132. Exemplarily, the second interface 132 may be a type-A USB interface, a type-B USB interface, a type-C USB interface, or the like.

In some embodiments, the second interface 132 may be used for the third-party software to obtain the event marking protocol from the supporting software, thereby enabling the third-party software to parse the event marking information sent by the control module 110 through the event marking protocol, so as to obtain the meaning or content of the event marking information.

In some embodiments, the supporting software of the host computer may send the event marking protocol to the control module through the first interface 131. After parsing the content sent by the first interface 131, the control module 110 determines that the event marking protocol is to be sent to the third-party software, then the control module 110 performs communication protocol encapsulation processing on the event marking protocol and sends it to the third-party software through the second interface 132. Exemplarily, the edge computing apparatus for synchronizing multimodal data 100 and the supporting software are designed by a same designer or produced or a same manufacturer. Both the edge computing apparatus for synchronizing multimodal data 100 and the supporting software are provided with the same event marking protocol, configuration protocol, etc., so that the supporting software can parse the event marking information sent by the edge computing apparatus for synchronizing multimodal data 100, and thus obtaining the meaning or the content of the event marking information. If a user interacts with the edge computing apparatus for synchronizing multimodal data 100 by using the third-party software from different design manufacturers or manufacturers, the event marking protocol may be obtained from the supporting software by using the edge computing apparatus for synchronizing multimodal data 100, and event marking information sent by the edge computing apparatus for synchronizing multimodal data 100 is parsed by using the event marking protocol.

In some embodiments, the third-party software may send a request for obtaining the event marking protocol through the second interface 132 in response to an operation of the user. After receiving the request, the control module 110 sends the request to the host computer through the first interface 131. The supporting software sends the event marking protocol to the control module 110 through the first interface 131 in response to the request. After processing, the control module 110 sends the event marking protocol to the third-party software through the second interface 132.

The fourth interface 142 may be configured to be connected to a first external device and/or a second external device, and may be configured to convert a transistor-transistor logic (TTL) level of the event marking information sent by the control module 110 into a TTL level supported by the first external device and/or the second external device, and then transmit it to the first external device and/or the second external device. Exemplarily, the fourth interface 142 may communicate with the control module 110 through the SPI. The first external device may be a sensor (for example, an environmental sensor or a BIO sensor) that supports input event marking and output event marking, and the second external device may be a sensor (for example, an environmental sensor or a BIO sensor) that supports the input event marking. Exemplarily, when the first external device and the second external device are not designed or produced by a same manufacturer as the edge computing apparatus for synchronizing multimodal data based on human factors intelligence, signal logic levels adopted by the circuit boards may be inconsistent. To enable the first external device and the second external device to cooperate with the edge computing apparatus for synchronizing multimodal data with different logic levels, the first interface 131 and/or the second interface 132 may be provided in the edge computing apparatus for synchronizing multimodal data based on human factors intelligence.

In some embodiments, the first external device and/or the second external device may be further configured to detect the multimodal data.

In some embodiments, the first external device and/or the second external device may be further configured to send the detected multimodal data to the host computer in real time.

The third interface 141 may be configured to be connected to the first external device, receive event marking information (the event marking information sent by the first external device may be referred to as fifth event marking information) sent by the first external device, convert the event marking information into a TTL level supported by the edge computing apparatus for synchronizing multimodal data 100, and send it to the control module 110. Exemplarily, the third interface 141 may communicate with the control module 110 through the SPI.

The control module 110 may be further configured to perform transmission protocol processing on the event marking information sent by the third interface 141, and then transmit it to the second external device through the first interface 131, transmit it to the second external device through the second interface 132, and transmit it to the second external device through the fourth interface 142.

Exemplarily, functions of the control module 110 may be implemented by using a field-programmable gate array (FPGA), a microcontroller unit (MCU), a central processing unit (CPU), and so on.

In some embodiments, the edge computing apparatus for synchronizing multimodal data based on human factors intelligence may include more or fewer modules and/or interfaces than the edge computing apparatus for synchronizing multimodal data 100. Exemplarily, the edge computing apparatus for synchronizing multimodal data based on human factors intelligence may include any one or more of an environmental data acquisition module 121, a BIO data acquisition module 122, an EXG data acquisition module 123, and an EEG data acquisition module 124. The EXG data acquisition module 123 and the EEG data acquisition module 124 may be combined into one module. Alternatively, the EXG data acquisition module 123 may be divided into an electromyography data acquisition module and an electrocardiogram data acquisition module. Alternatively, there may be multiple BIO data acquisition modules 122. Alternatively, the edge computing apparatus for synchronizing multimodal data based on human factors intelligence may further include a power module. Alternatively, the edge computing apparatus for synchronizing multimodal data based on human factors intelligence may further include an optical port, which is configured to convert light emitted by an optical module into an electrical signal, and so on.

In some embodiments, the edge computing apparatus for synchronizing multimodal data based on human factors intelligence may further include an artificial intelligence (AI) module based on the foregoing embodiments.

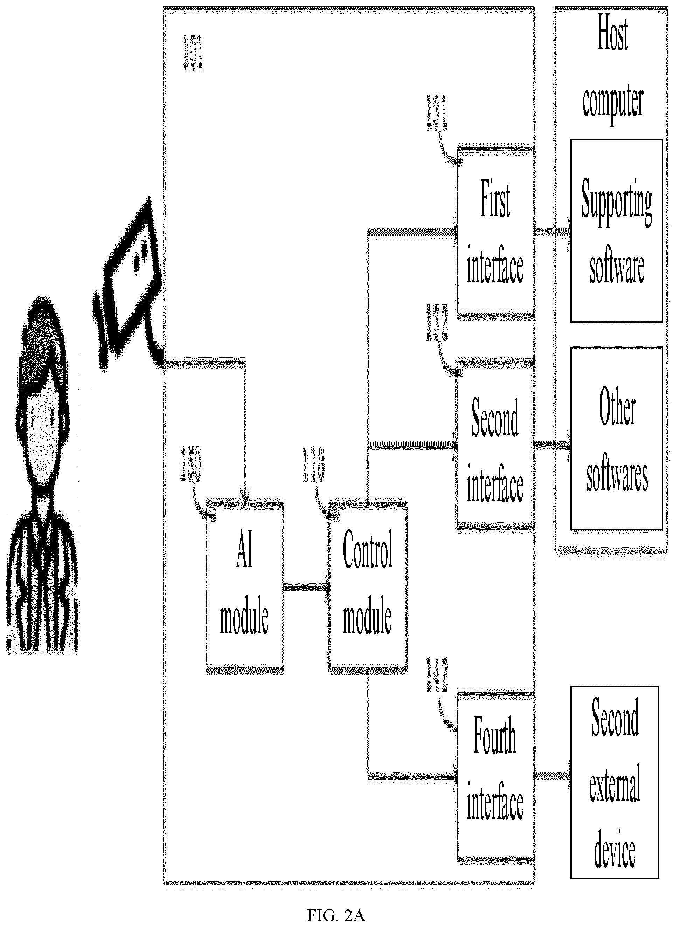

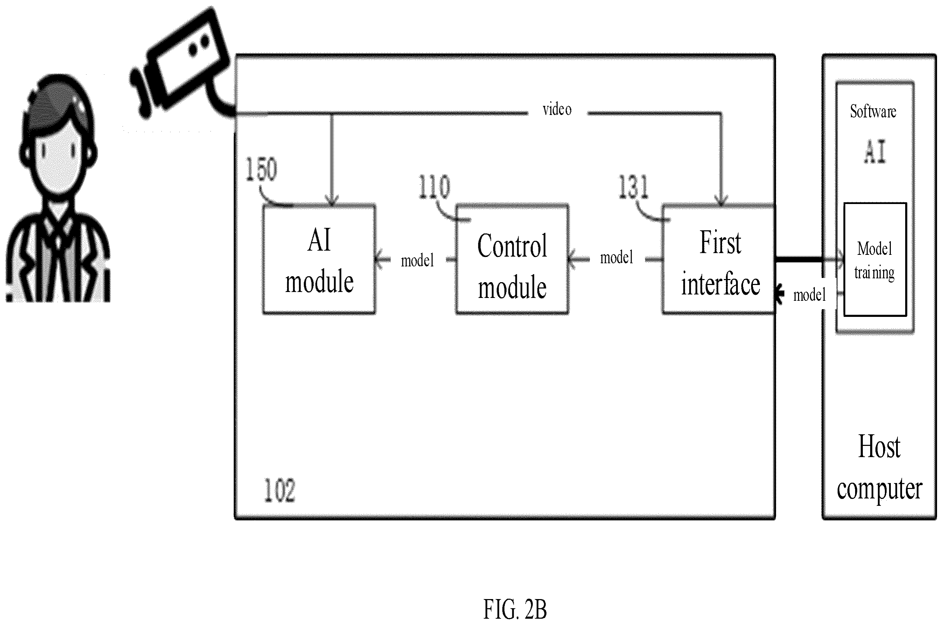

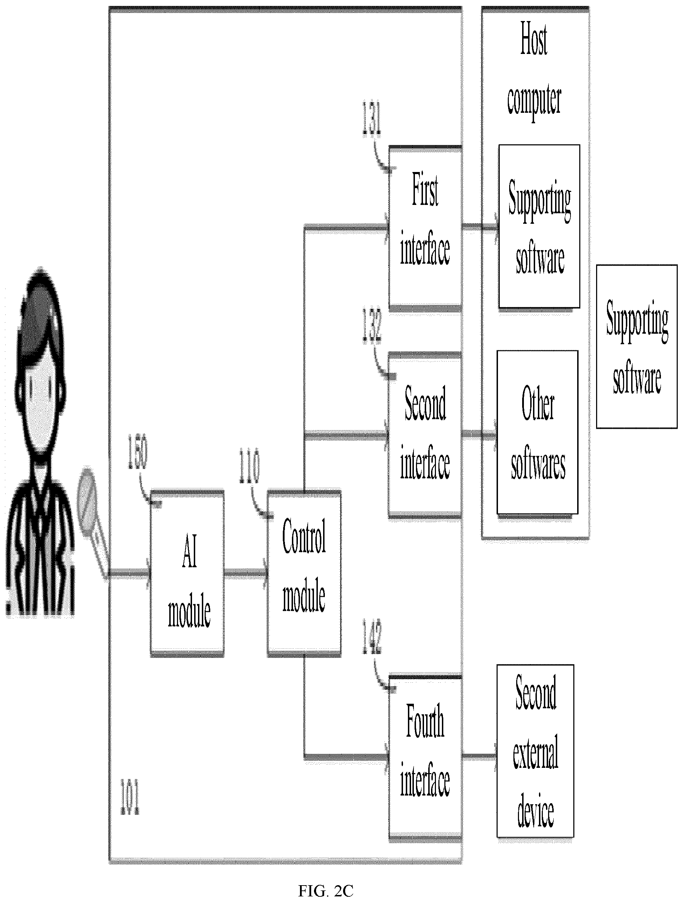

Another embodiment of an edge computing apparatus for synchronizing multimodal data based on human factors intelligence is the edge computing apparatus for synchronizing multimodal data 101 shown in FIG. 2a. As shown in FIG. 2, the edge computing apparatus for synchronizing multimodal data 101 includes: a control module 110, a first interface 131, a second interface 132, a fourth interface 142, and an AI module 150.

The AI module 150 is configured to be connected to a video capture device such as a camera, and may identify a collected video signal by an AI model. The video capture device is configured to capture a video signal of the test subject in a monitoring region in real time, and transmit the video signal to the AI module 150.

In some embodiments, the AI module 150 may be further configured to perform processing such as denoising, enhancement, and decoding on the video signal, to improve quality and definition of the video image, thereby improving accuracy of AI recognition.

In some embodiments, the AI module 150 performs AI recognition on the video signal, which may include one or more of video segmentation, feature extraction, target detection, target tracking, behavior analysis, and event recognition.

Video segmentation may include segmenting a video into frame-by-frame images.

The feature extraction may include using a computer vision algorithm to extract key action features of the test subject from an image of each frame obtained by the video segmentation.

The target detection may include using a target detection algorithm to identify and locate a specific action of the test subject accurately in the video according to the key action features obtained by the feature extraction.

The target tracking may include tracking the actions obtained by the target detection between consecutive frames obtained through video segmentation, so as to ensure the continuity and accuracy of the target.

The behavior analysis and event recognition may include performing deep analysis on a behavior of the target according to a trajectory and actions of the target, recognizing an abnormal behavior or a specific event, and generating event marking information (the event marking information generated triggered by the video may be referred to as first event marking information), to implement behavior event marking of the test subject. Exemplarily, the event marking information may be some fields, and one or more of the fields may be configured to indicate a target action, such as the test subject performing the action of patting the head. Exemplarily, when the AI module 150 identifies the target action, a value of the one or more fields is set to be a predetermined value, thereby completing the behavior event marking.

The AI module 150 may also be configured to send event marking information to the control module 110. In some embodiments, the AI module 150 may also encapsulate the event marking information as a data packet receivable by the control module 110. Exemplarily, the AI module 150 may communicate with the control module 110 through the SPI. Correspondingly, the AI module 150 may encapsulate the event marking information into a data packet receivable by the SPI and send it to the control module 110.

After receiving the data packet, the control module 110 may parse the event marking information, encapsulate the event marking information into the data packet transmissible by the first interface 131, the second interface 132, and the fourth interface 142, and send it to the first interface 131, the second interface 132, and the fourth interface 142, respectively. The first interface 131 may be further configured to send the event marking information of the AI module 150 to the supporting software of the host computer. The second interface 132 may be further configured to send the event marking information of the AI module 150 to other softwares of the host computer. The fourth interface 142 may be further configured to send the event marking information of the AI module 150 to the second external device.

Exemplarily, the AI model used for the AI recognition in the AI module 150 may be trained by the AI software shown in FIG. 2b. The AI software of the host computer may first construct a deep learning model, and train the deep learning model by using a large amount of labeled data, so that the deep learning model can learn a mapping relationship between input data and correct output recognition results in a training process, enabling the model to accurately analyze and identify new videos captured by the camera, recognize and classify objects in the videos, and identify target behaviors. After the AI software trains an initial model, that is, after the model has analysis and recognition capabilities, it is evaluated and optimized to enhance the model's accuracy and efficiency. Exemplarily, the AI software of the host computer can use the initially trained model to identify the video sent by the camera through the edge computing apparatus for synchronizing multimodal data 101, to determine whether the model meets the requirement.

After the model is trained, as shown in FIG. 2b, the trained model can be sent from the AI software of the host computer to the control module 110 in the edge computing apparatus for synchronizing multimodal data 102 through the first interface 131. Then, the control module 110 sends the model to the AI module. During subsequent experiments, the AI module may utilize the model to perform real-time analysis and recognition on the received video stream. When the recognition result matches the target behavior, the AI module performs event marking and feeds the event marking information back to the control module 110.

In some embodiments, the edge computing apparatus for synchronizing multimodal data based on human factors intelligence may have fewer interfaces than the edge computing apparatus for synchronizing multimodal data 101, such as only one or two of the first interface, the second interface, and the fourth interface.

In some embodiments, as shown in FIG. 2c, the AI module 150 in the edge computing apparatus for synchronizing multimodal data 101 shown in FIG. 2a may be configured to be connected to a microphone, recognize a voice signal received by the microphone, and generate event marking information (the event marking information generated by voice triggering may be referred to as second event marking information) when a recognition result matches a target voice, thereby achieving voice event marking. The manner in which the AI module 150 performs voice event marking may be similar to the principle of video event marking in the foregoing embodiments.

In the above embodiments, the edge computing apparatus for synchronizing multimodal data based on human factors intelligence can be applied to any human factors engineering experimental scenarios that require active triggering by humans through the AI module. Exemplarily, the edge computing apparatus for synchronizing multimodal data can, in the absence of experimenters, recognize the behaviors of the test subject during human factors engineering experiments through its AI module. When the test subject makes predefined behaviors such as gestures, expressions, or eye movements, it can trigger the AI module to perform event marking, thereby enabling the human factors engineering experiments.

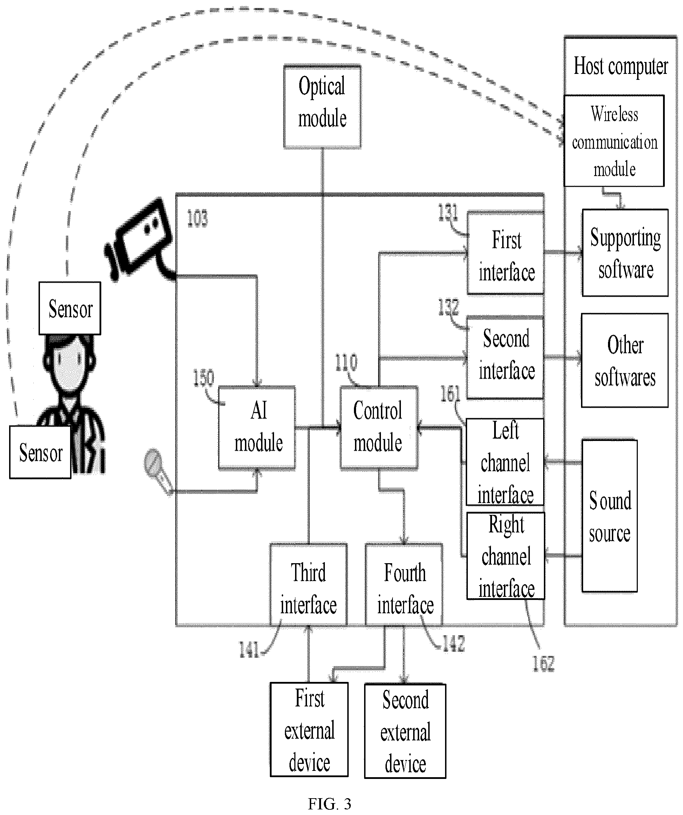

Another embodiment of an edge computing apparatus for synchronizing multimodal data based on human factors intelligence is the edge computing apparatus for synchronizing multimodal data 103 shown in FIG. 3. As shown in FIG. 3, a difference between this embodiment and the foregoing embodiment lies in that the AI module 150 may be used for both video event marking and voice event marking, and the edge computing apparatus for synchronizing multimodal data 103 may further include a left channel interface 161 and a right channel interface 162, which are configured to receive a sound source from the host computer. The sound source of the host computer is configured to stimulate the audition of the test subject. When a volume of the sound source exceeds a threshold, the edge computing apparatus for synchronizing multimodal data 103 may perform voice event marking (i.e., marking the event where the sound exceeds the threshold), generate event marking information (the event marking information triggered by the sound may be referred to as fourth event marking information), and send the event marking information to the supporting software, other softwares of the host computer, and the first external device and the second external device through the first interface 131, the second interface 132, and the fourth interface 142, respectively.

As shown in FIG. 3, when the host computer is online, the sensors worn by the test subject can send the collected data (such as biological data and bioelectric data) in real time through electromagnetic waves. The host computer can receive it in real time through the wireless communication module and sent it to the supporting software for analysis and other processing.

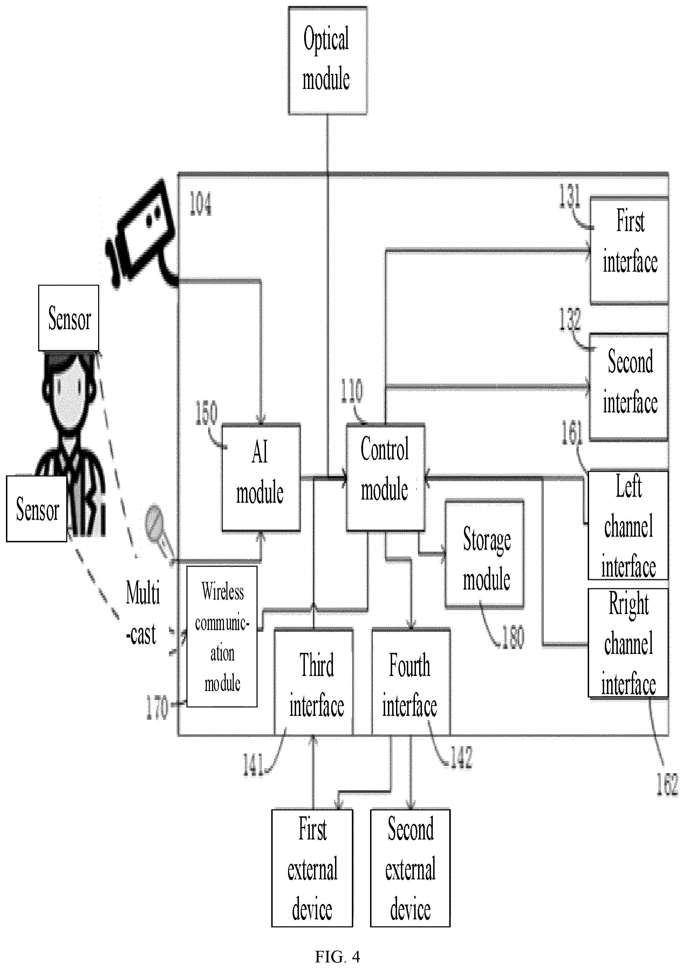

Another embodiment of an edge computing apparatus for synchronizing multimodal data based on human factors intelligence is the edge computing apparatus for synchronizing multimodal data 104 shown in FIG. 4. As shown in FIG. 4, the edge computing apparatus for synchronizing multimodal data 104 differs from the foregoing embodiments in that the edge computing apparatus for synchronizing multimodal data 104 further includes a wireless communication module 170 and a storage module 180, and the AI module 150 may be not only used for video event marking, but also used for voice event marking.

The storage module 180 is connected to the control module 110 and may be configured to store event marking information. Exemplarily, the control module 110 stores the first event marking information (the first event marking information may be event information indicating the occurrence of target behaviors) or the second event marking information (the second event marking information may be event information indicating the occurrence of target voices) sent by the AI module into the storage module 180. When the light emitted by the optical module exceeds the threshold, the control module 110 generates third event marking information (the third event marking information may be event information indicating that the light exceeds the threshold), and sends the third event marking information to the storage module 180 for storage. For another example, when the sound volume received by the left channel interface 161 and the right channel interface 162 exceeds the threshold, the control module 110 may store the generated fourth event marking information (the fourth event marking information may be event information indicating that the sound volume exceeds the threshold) in the storage module 180. For another example, the control module 110 stores the fifth event marking information received by the third interface 141 from the first external device into the storage module 180, and so on.

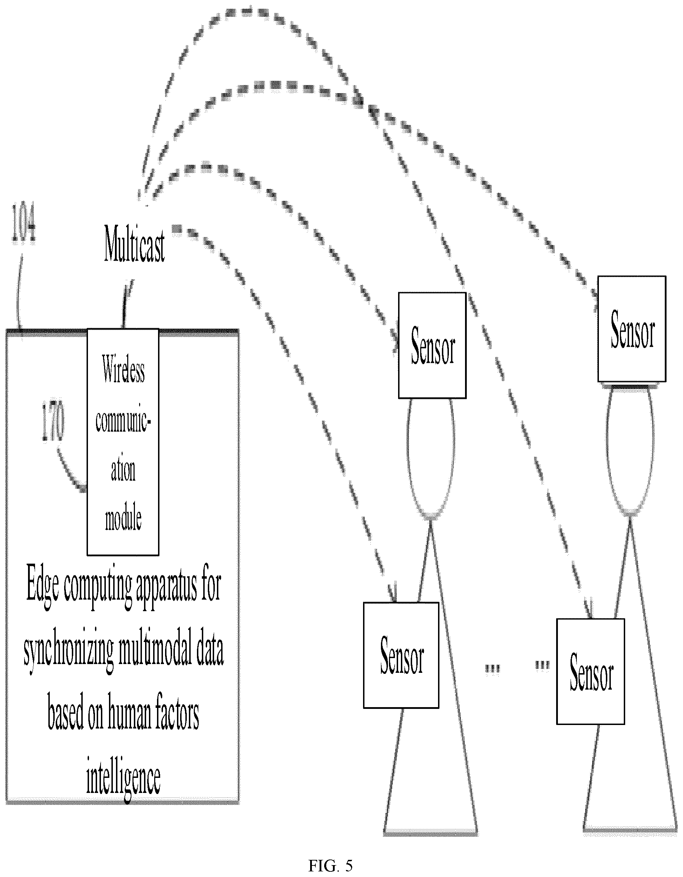

The wireless communication module 170 is configured to transmit any one or more of the first event marking information, the second event marking information, the third event marking information, and the fourth event marking information in a wireless manner. Exemplarily, when the sensor worn by the test subject is in an offline storage state and the detected data cannot be sent to the host computer in real time, the control module 110 may send the generated third event marking information and/or the fourth event marking information, and/or the first event marking information and/or the second event marking information received from the AI module 150 to the sensor through the wireless communication module 170. When there are multiple sensors, the wireless communication module 170 may synchronize the event marking information to the multiple sensors through multicast. When there are multiple test subjects, as shown in FIG. 5, the wireless communication module 170 may further synchronize the event marking information to sensors worn by the multiple test subjects through multicast.

In this embodiment, the edge computing apparatus for synchronizing multimodal data 104 stores the event marking information by the storage module 180, so that when the event marking information sent by the wireless communication module 170 is lost or when the wireless communication module 170 sends the event marking information and the sensor fails to receive it, backup event marking information can be provided for subsequent analysis and processing of multimodal data by the host computer, thereby improving reliability of synchronizing data by the edge computing apparatus for synchronizing multimodal data.

Exemplarily, the wireless communication module may be a bluetooth module (for example, a bluetooth low energy (BLE) module), a wireless fidelity (WiFi) module, or a near field communication (NFC) module.

In the foregoing embodiments, after the AI software of the host computer trains an AI model and deploys it to the AI module, the edge computing apparatus for synchronizing multimodal data based on human factors intelligence may further perform offline event marking on the external device without the host computer through the storage module and/or wireless communication module, thereby achieving data synchronization.

The system for synchronizing multimodal data based on human factors intelligence provided in the embodiments of the present disclosure may include the edge computing apparatus for synchronizing multimodal data based on human factors intelligence provided in any one of the foregoing embodiments, and any one or more of a host computer, an optical module, at least one sensor, a first external device, and a second external device. As shown in FIG. 1, the system for synchronizing multimodal data based on human factors intelligence may include an edge computing apparatus for synchronizing multimodal data 101, an environmental sensor, a BIO sensor, an EXG sensor, an EEG sensor, an optical module, a host computer, a first external device and a second external device. As shown in FIG. 2a, the system for synchronizing multimodal data based on human factors intelligence may include an edge computing apparatus for synchronizing multimodal data 101, a video capture device, a host computer and a second external device. As shown in FIG. 2b, the system for synchronizing multimodal data based on human factors intelligence may include an edge computing apparatus for synchronizing multimodal data 102 and a host computer. As shown in FIG. 2c, the system for synchronizing multimodal data based on human factors intelligence may include an edge computing apparatus for synchronizing multimodal data 101, a voice input device, a host computer and a second external device. As shown in FIG. 3, the system for synchronizing multimodal data based on human factors intelligence may include an edge computing apparatus for synchronizing multimodal data 103, a sensor, an optical module, a host computer, a first external device and a second external device. As shown in FIG. 4, the system for synchronizing multimodal data based on human factors intelligence may include an edge computing apparatus for synchronizing multimodal data 104, a sensor, an optical module, a first external device and a second external device.

It should be understood that the division of each module in the above embodiments is merely a division based on logical functions, and all modules may be completely or partially integrated into one physical entity in actual implementation, or may be physically separated. In addition, some modules may be implemented in a form of software called by a processing element, and some modules are implemented in a form of hardware. Exemplarily, the processor may be an independently established processing element, or may be integrated into a chip of the electronic device. The other modules are implemented similarly. In addition, all or part of these modules may be integrated together, or may be separately implemented.

In an embodiment of the present disclosure, "at least one" means one or more, and "multiple" means two or more. It should be understood that the term "and/or" describes an association relationship of an associated object, and indicates three relationships, for example, A and/or B can indicate A, A and B, and B, where A and B may be singular or plural. The character "/" herein generally indicates an "or" relationship between the associated objects. "At least one of the following items" and similar expressions thereof refer to any combination of these items, including any combination of single items or plural items. Exemplarily, at least one of a, b, and c may represent: a, b, c, a and b, a and c, b and c, or a, b, and c, where each of a, b, and c may be a single one or multiple.

Those skilled in the art may understand that each module described in the embodiments disclosed herein can be implemented by electronic hardware, or a combination of electronic hardware and computer software. Whether these functions of these modules are executed in hardware or software depends on the specific application and design constraints of the technical solutions.

In some embodiments provided in the present disclosure, if any function is implemented in a form of a software function unit and is sold or used as an independent product, the function may be stored in a computer-readable storage medium. Based on such comprehension, the technical solutions of the present disclosure, in whole or in part, or a part contributing to the related art, may be embodied in a form of a software product. The computer software product is stored in a storage medium and includes instructions for causing a computer device (which may be a personal computer, a server, or a network device, etc.) to perform all or part of the steps of the methods in embodiments of the present disclosure. The foregoing storage medium includes various media that can store program codes, such as universal serial bus (USB) flash drive, mobile hard disk, read-only memory (ROM), random access memory (RAM), magnetic disk, or optical disk.

The foregoing descriptions are merely specific implementations of the present disclosure. Any change or replacement within the technical scope disclosed in embodiments of the present disclosure, that can be easily conceivable by those skilled in the art, shall fall within the protection scope of embodiments of the present disclosure. The protection scope of the present disclosure shall be defined by the protection scope of the claims.

## Claims

1. An edge computing apparatus for synchronizing multimodal data based on human factors intelligence, comprising:
an artificial intelligence, AI, module configured for coupling with a video capture device and/or a voice input device, wherein the AI module is configured to recognize a video signal acquired by the video capture device, and issue first event marking information when a recognition result of the video signal matches a target behavior, and/or the AI module is configured to recognize a voice signal acquired by the voice input device, and issue second event marking information when a recognition result of the voice signal matches a target voice;
a control module coupled to the AI module and a first interface, wherein the control module is configured to perform communication protocol encapsulation processing on the first event marking information and/or the second event marking information, and send processed information to the first interface; and
the first interface configured to be coupled to a host computer, and send the first event marking information and/or the second event marking information to the host computer.

2. The apparatus according to claim 1, further comprising:
a wireless communication module coupled to the control module,
wherein the control module is further configured to send the first event marking information and/or the second event marking information to at least one sensor through the wireless communication module.

3. The apparatus according to claim 2, further comprising:
a storage module coupled to the control module,
wherein the control module is further configured to store the first event marking information and/or the second event marking information into the storage module.

4. The apparatus according to any one of claims 1 to 3, further comprising:
a second interface coupled to the control module, wherein the second interface is further configured to be coupled to a third-party software terminal, and
wherein the control module is further configured to send the first event marking information and/or the second event marking information to the third-party software terminal through the second interface.

5. The apparatus according to claim 4, wherein the control module is further configured to obtain an event marking protocol from the host computer through the first interface, and send the event marking protocol to the third-party software terminal through the second interface, wherein the event marking protocol is configured to define the first event marking information and/or the second event marking information.

6. The apparatus according to any one of claims 1 to 3, wherein the control module is further configured to be connected to an optical module, receive an optical signal sent by the optical module, generate third event marking information when the optical signal exceeds a first threshold, and send the third event marking information to the host computer through the first interface.

7. The apparatus according to any one of claims 1 to 3, further comprising:
an audio interface coupled to the control module and configured to send a received audio signal to the control module, and
wherein the control module is further configured to generate fourth event marking information when the audio signal exceeds a second threshold, and send the fourth event marking information to the host computer through the first interface.

8. The apparatus according to any one of claims 1 to 3, further comprising:
a third interface coupled to the control module, wherein the third interface is further configured to be coupled to a first external device, and convert a level of fifth event marking information sent by the first external device into a transistor-transistor logic, TTL, level supported by the control module, and
wherein the control module is further configured to receive the fifth event marking information through the third interface, and send the fifth event marking information to the host computer through the first interface.

9. The apparatus according to any one of claims 1 to 3, further comprising:
a fourth interface coupled to the control module and further configured to be coupled to a second external device, and
wherein the control module is further configured to send the first event marking information and/or the second event marking information to the second external device through the fourth interface.

10. A system for synchronizing multimodal data synchronization based on human factors intelligence, comprising:
a host computer;
at least one sensor configured to send collected multimodal data to the host computer;
the edge computing apparatus for synchronizing multimodal data according to any one of claims 1 to 9; and
a video capture device and/or a voice input device configured to trigger the edge computing apparatus for synchronizing multimodal data to perform event marking, wherein the event marking is configured to generate first event marking information and/or second event marking information,
wherein the edge computing apparatus for synchronizing multimodal data is configured to send the first event marking information and/or the second event marking information to the host computer, and the host computer is configured to perform data synchronization and analysis on the multimodal data based on the first event marking information and/or the second event marking information.

11. The system according to claim 10,
wherein the edge computing apparatus for synchronizing multimodal data is configured to send the first event marking information and/or the second event marking information to the at least one sensor when the at least one sensor is offline; and/or
wherein the at least one sensor is configured to send the multimodal data to the host computer in a wireless manner.

12. The system according to claim 10 or 11, further comprising:
an optical module configured to trigger the edge computing apparatus for synchronizing multimodal data to perform optical event marking, wherein the optical event marking is configured to generate third event marking information,
wherein the edge computing apparatus for synchronizing multimodal data is further configured to send the third event marking information to the host computer, and the host computer is further configured to perform data synchronization and analysis on the multimodal data based on the first event marking information and/or the second event marking information, and the third event marking information.

13. The system according to claim 10 or 11, wherein the host computer is further configured to trigger the edge computing apparatus for synchronizing multimodal data to perform voice event marking, wherein the voice event marking is configured to generate fourth event marking information,
wherein the edge computing apparatus for synchronizing multimodal data is further configured to send the fourth event marking information to the host computer, and
wherein the host computer is further configured to perform data synchronization and analysis on the multimodal data based on the first event marking information and/or the second event marking information, and the fourth event marking information.

14. The system according to claim 10 or 11, further comprising:
a first external device configured to send fifth event marking information to the edge computing apparatus for synchronizing multimodal data,
wherein the edge computing apparatus for synchronizing multimodal data is further configured to receive the fifth event marking information, and send the fifth event marking information to the host computer, and the host computer is further configured to perform data synchronization and analysis on the multimodal data based on the first event marking information and/or the second event marking information, and the fifth event marking information.

15. The system according to claim 10 or 11, further comprising:
a second external device, wherein the edge computing apparatus for synchronizing multimodal data is further configured to send the first event marking information and/or the second event marking information to the second external device.

## Amended claims

### Amended claims in accordance with Rule 137(2) EPC.

1. An edge computing apparatus for synchronizing multimodal data based on human factors intelligence, comprising:
an artificial intelligence, AI, module configured for coupling with a video capture device and/or a voice input device, wherein the AI module is configured to perform video event recognition on a video signal acquired by the video capture device, and issue first event marking information when a recognition result of the video signal matches a target behavior, wherein the video event recognition comprises one or more of video segmentation, feature extraction, target detection, target tracking, behavior analysis, and event recognition, and/or the AI module is configured to perform voice feature extraction and voice matching recognition on a voice signal acquired by the voice input device, and issue second event marking information when a recognition result of the voice signal matches a target voice;
a control module coupled to the AI module and a first interface, wherein the control module is configured to perform communication protocol encapsulation processing on the first event marking information and/or the second event marking information, and send processed information to the first interface;
at least one multimodal data acquisition module configured to acquire multimodal data and send the multimodal data to the first interface, wherein the multimodal data comprises one or more of environmental data, biosensor (BIO) data, electromyography data, electrocardiogram data, and electroencephalogram data; and
the first interface configured to be coupled to a host computer, and send the first event marking information and/or the second event marking information, as well as the multimodal data to the host computer, such that the host computer aligns the multimodal data by using the first event marker information and/or the second event marker information.

2. The apparatus according to claim 1, further comprising:
a wireless communication module coupled to the control module,
wherein the control module is further configured to send the first event marking information and/or the second event marking information to at least one sensor through the wireless communication module.

3. The apparatus according to claim 2, further comprising:
a storage module coupled to the control module,
wherein the control module is further configured to store the first event marking information and/or the second event marking information into the storage module.

4. The apparatus according to any one of claims 1 to 3, further comprising:
a second interface coupled to the control module, wherein the second interface is further configured to be coupled to a third-party software terminal, and
wherein the control module is further configured to send the first event marking information and/or the second event marking information to the third-party software terminal through the second interface.

5. The apparatus according to claim 4, wherein the control module is further configured to obtain an event marking protocol from the host computer through the first interface, and send the event marking protocol to the third-party software terminal through the second interface, wherein the event marking protocol is configured to define the first event marking information and/or the second event marking information.

6. The apparatus according to any one of claims 1 to 3, wherein the control module is further configured to be connected to an optical module, receive an optical signal sent by the optical module, generate third event marking information when the optical signal exceeds a first threshold, and send the third event marking information to the host computer through the first interface.

7. The apparatus according to any one of claims 1 to 3, further comprising:
an audio interface coupled to the control module and configured to send a received audio signal to the control module, and
wherein the control module is further configured to generate fourth event marking information when the audio signal exceeds a second threshold, and send the fourth event marking information to the host computer through the first interface.

8. The apparatus according to any one of claims 1 to 3, further comprising:
a third interface coupled to the control module, wherein the third interface is further configured to be coupled to a first external device, and convert a level of fifth event marking information sent by the first external device into a transistor-transistor logic, TTL, level supported by the control module, and
wherein the control module is further configured to receive the fifth event marking information through the third interface, and send the fifth event marking information to the host computer through the first interface.

9. The apparatus according to any one of claims 1 to 3, further comprising:
a fourth interface coupled to the control module and further configured to be coupled to a second external device, and
wherein the control module is further configured to send the first event marking information and/or the second event marking information to the second external device through the fourth interface.

10. A system for synchronizing multimodal data synchronization based on human factors intelligence, comprising:
a host computer;
at least one sensor configured to send collected multimodal data to the host computer;
the edge computing apparatus for synchronizing multimodal data according to any one of claims 1 to 9; and
a video capture device and/or a voice input device configured to trigger the edge computing apparatus for synchronizing multimodal data to perform event marking, wherein the event marking is configured to generate first event marking information and/or second event marking information,
wherein the edge computing apparatus for synchronizing multimodal data is configured to send the first event marking information and/or the second event marking information to the host computer, and the host computer is configured to perform data synchronization and analysis on the multimodal data based on the first event marking information and/or the second event marking information.

11. The system according to claim 10,
wherein the edge computing apparatus for synchronizing multimodal data is configured to send the first event marking information and/or the second event marking information to the at least one sensor when the at least one sensor is offline; and/or
wherein the at least one sensor is configured to send the multimodal data to the host computer in a wireless manner.

12. The system according to claim 10 or 11, further comprising:
an optical module configured to trigger the edge computing apparatus for synchronizing multimodal data to perform optical event marking, wherein the optical event marking is configured to generate third event marking information,
wherein the edge computing apparatus for synchronizing multimodal data is further configured to send the third event marking information to the host computer, and the host computer is further configured to perform data synchronization and analysis on the multimodal data based on the first event marking information and/or the second event marking information, and the third event marking information.

13. The system according to claim 10 or 11, wherein the host computer is further configured to trigger the edge computing apparatus for synchronizing multimodal data to perform voice event marking, wherein the voice event marking is configured to generate fourth event marking information,
wherein the edge computing apparatus for synchronizing multimodal data is further configured to send the fourth event marking information to the host computer, and
wherein the host computer is further configured to perform data synchronization and analysis on the multimodal data based on the first event marking information and/or the second event marking information, and the fourth event marking information.

14. The system according to claim 10 or 11, further comprising:
a first external device configured to send fifth event marking information to the edge computing apparatus for synchronizing multimodal data,
wherein the edge computing apparatus for synchronizing multimodal data is further configured to receive the fifth event marking information, and send the fifth event marking information to the host computer, and the host computer is further configured to perform data synchronization and analysis on the multimodal data based on the first event marking information and/or the second event marking information, and the fifth event marking information.

15. The system according to claim 10 or 11, further comprising:
a second external device, wherein the edge computing apparatus for synchronizing multimodal data is further configured to send the first event marking information and/or the second event marking information to the second external device.
